# EUROPÄISCHE PATENTSCHRIFT

(11) **EP 3 771 847 B1**
(45) Veröffentlichungstag und Bekanntmachung des Hinweises auf die Patenterteilung: **04.10.2023**
(21) Anmeldenummer: 20188699.1
(22) Anmeldetag: 30.07.2020
(51) Int. Cl.: F16G 3/02, A01D 17/10, F16G 3/04, F16G 3/08

(54) **RIEMENSCHLOSS UND RIEMEN**
BELT FASTENING AND BELT
ATTACHE DE COURROIE ET COURROIE

(30) Priorität: 02.08.2019 DE 202019104274 U; 29.08.2019 DE 202019104761 U
(43) Veröffentlichungstag der Anmeldung: 03.02.2021
(73) Patentinhaber: Ricon GmbH & Co. KG, 49401 Damme (DE)
(72) Erfinder: Hugenberg, Ansgar, 49451 Holdorf (DE)
(74) Vertreter: Wischmeyer, André

(56) Entgegenhaltungen:
- DE-B3-102013 013 446
- DE-C- 513 389
- FR-A- 1 211 432
- FR-A1- 2 263 426
- FR-A1- 3 058 707
- US-A- 4 344 209
- US-A- 5 360 103

## Beschreibung

Die vorliegende Erfindung betrifft ein Riemenschloss für einen Riemen für ein landwirtschaftliches Arbeitsgerät, insbesondere eine Hackfruchternte- oder -Transportmaschine, umfassend zwei über einen Schlossstift zu verbindende Anschlussstücke, die jeweils ein Oberteil und ein Unterteil aufweisen, wobei Ober- und Unterteil einstückig mit einem eine Aufnahme für den Schlossstift ausbildenden Scharnierbereich und zur Aufnahme eines jeweiligen Riemenendes zwischen sich ausgebildet sind und insbesondere wobei Ober- und Unterteil jeweils wenigstens eine Ausnehmung zur Anordnung von Befestigungsmitteln aufweisen. Des Weiteren betrifft die Erfindung einen Riemen für ein landwirtschaftliches Arbeitsgerät mit einem vorbezeichneten Riemenschloss.

Im Stand der Technik, beispielsweise aus der DE 29716333 U1 oder FR1211432, FRA7407207, bekannte Riemenschlösser lassen sich bei deren Verschleiß nur umständlich austauschen. Einzelne Befestigungsmittel in Form eines oder mehrere Niete müssen gelöst werden, um die an den jeweiligen, miteinander zu verbindenden Riemenenden festgelegten Anschlussstücke auszutauschen. Anschließend sind die Riemenenden zu inspizieren, um zu überprüfen, inwieweit an denselben Stellen wiederum Niete angebracht werden können.

Des Weiteren ist es aus dem Stand der Technik bekannt, Verschraubungen anstelle der Niete einzusetzen, deren Handhabung allerdings aus anderen Gründen umständlich ist. Durch das Durchschrauben der Riemen setzen sich Kunststoffreste in das Gewinde, so dass die Schrauben nicht unbedingt komplett montiert werden können. Darüber hinaus sind die verwendeten Schrauben mit auf der Unterseite, d.h. zu etwaigen Laufflächen der Riemen hin, angeordneten Muttern versehen, die im Betrieb vergleichsweise häufig beschädigt werden und abbrechen können. Schließlich weisen viele der bekannten Riemenschlösser zusätzlich noch Buchsen auf, die von außen schlecht einsehbar sind und deren Verschleißzustand daher nicht gut geprüft werden kann.

Es ist Aufgabe der vorliegenden Erfindung, ein Riemenschloss bzw. einen Riemen mit einem entsprechenden Riemenschloss hinsichtlich der genannten Nachteile zu verbessern.

Die Aufgabe wird gelöst durch ein Riemenschloss gemäß Anspruch 1 sowie durch einen Riemen gemäß Anspruch 13.

Vorteilhafte Ausgestaltungen der Erfindung sind den Unteransprüchen sowie der nachfolgenden Beschreibung zu entnehmen.

Ein erfindungsgemäßes Riemenschloss weist jeweils einen an dem jeweiligen Anschlussstück angeordneten Riemenadapter auf, über den das jeweilige Anschlussstück lösbar mit dem jeweiligen Riemenende zu verbinden ist. Während der jeweilige Riemenadapter fest mit dem Riemenende verbunden werden kann und somit in seiner Position am Riemenende verbleibt, kann der besonders verschleißanfällige Scharnierbereich auf einfache Weise ausgetauscht bzw. hinsichtlich seines Verschleißes überprüft werden, ohne dass die eigentliche Verbindung zum jeweiligen Riemenende gelöst werden muss. Bei der Anordnung und Festlegung der Riemenadapter am jeweiligen Riemenende muss nicht auf dessen Lösbarkeit zwecks Austausch geachtet werden und er kann optimal befestigt werden.

Nachfolgend wird sich der Einfachheit halber oftmals auf ein Anschlussstück mit dem jeweiligen Riemenadapter und das jeweilige Riemenende bezogen. Es versteht sich, dass die jeweilige Ausbildung dann auch für das weitere Anschlussstück am weiteren Riemenende gilt.

Der Scharnierbereich umfasst insbesondere diejenigen Bereiche des Riemenschlosses, in denen im Betrieb des Riemens die Bewegung aneinander anliegender Teile des Riemenschlosses gegeneinander erfolgt.

Insbesondere ist das Anschlussstück lösbar, vorzugsweise über eine Hülsenmutter-Gewindeschrauben-Kombination manuell lösbar, an dem Riemenadapter befestigt. Anstelle von lösbaren Schraubverbindungen, bei denen insbesondere sowohl die Hülsenmutter als auch die Gewindeschrauben im Anschlussstück versenkt sein können, um keine den Riemenlauf behindernden Erhöhungen zu generieren, sind auch Rastlösungen verwendbar, über die das Anschlussstück mit dem Riemenadapter verbindbar ist. Die Lösbarkeit kann auch durch Kombinationen von schraub- und rastbaren Befestigungsmitteln erreicht werden.

Um ausreichend Bauraum für das erfindungsgemäße Riemenschloss zu besitzen, können etwaige vorstehende Stege des Riemens hinsichtlich ihrer Höhe reduziert werden bzw. entfernt werden, so dass das erfindungsgemäße Riemenschloss nicht höher baut als übrige hervorstehende Bereiche des Riemens. Gleichzeitig kann sich der Riemenadapter dem Profil einer Riemenseite zwecks besserer Festlegung an dieser folgen.

Vorzugsweise werden als Schlossstift bolzen- oder zapfenförmige Verbindungselemente, insbesondere ein entsprechend geformtes Ende eines Stabes, beispielsweise eines Siebstabs, verwendet, so dass auf zusätzliche, separate Schlossstifte verzichtet werden kann.

Insbesondere weist der Riemenadapter wenigstens ein flächiges Adapterelement, insbesondere eine Adapterplatte, auf, auf dessen einer Seite das Riemenende anzuordnen ist, während auf einer von dieser Seite abgewandten weiteren Seite der Ober- oder Unterteil des Anschlussstücks angeordnet ist. Ein solches flächiges Element legt sich somit am Riemenende an, um mit diesem eine zumindest auch teilweise reibschlüssige Verbindung einzugehen und weist darüber hinaus Bereiche auf, an denen sich das Anschlussstück anlegt. Die Verbindung mit dem Anschlussstück kann hierbei sowohl über Reib- als auch Formschluss erfolgen. Besonders bevorzugt ist eine Kombination, bei der einerseits eine flächige Anlage zwischen Anschlussstückbereichen, insbesondere deren Innenseiten von Ober- oder Unterteil und andererseits eine weitere Verbindung über zusätzliche Befestigungsmittel erfolgt.

Insbesondere ist das Riemenschloss mit einem Riemenadapter versehen, welcher auf zwei aufeinander abgewandten Seiten des Riemenende anzuordnende, flächige Adapterelemente, insbesondere Adapterplatten, aufweist und diese zur Anordnung und Festlegung des Riemenende zwischen sich ausgebildet sind.

Das Riemenende kann zwischen den Adapterelementen festgeklemmt werden, wobei die Adapterelemente auf ihren Außenseiten Anlagebereiche und Befestigungsbereiche für ein jeweiliges Anschlussstück ausbilden. Sie sind somit insbesondere zumindest teilweise zwischen den Innenseiten von Ober- bzw. Unterteil des jeweiligen Anschlussstücks angeordnet und lösbar mit diesem befestigt. Ober- und Unterteil sind hierbei insbesondere Bereiche des Anschlussstücks, die keine Durchführung für den Schlossstift ausbilden und insbesondere auf voneinander weg weisenden Seiten eines Riemenendes angeordnet sind. In Einzelfällen können Ober- und Unterteil auch teilweise am Stirnende eines Riemenendes angeordnet sein. Insbesondere handelt es sich bei dem Ober- und Unterteil um Bereiche des einstückig ausgebildeten Anschlussstücks, zwischen denen noch ein Stück des Riemenendes angeordnet ist.

Flächig ist das Adapterelement dann, wenn dessen Länge in Längsrichtung des Riemenendes größer ist als die Erstreckung des Adapterelements quer dazu.

Zur besseren Anlage an dem Riemenende bzw. zur verbesserten Festlegung an diesem ist die Adapterplatte gemäß Anspruch 1, mit einem gekröpften Bereich versehen.

Ein solcher Versatz in der Adapterplatte lässt diese sich besser an stegartige Bereiche des Riemenendes anlegen. Darüber hinaus wird über eine solche Stufe im Riemen ein Engpass gebildet, so dass ein Formschluss anstelle eines Reibschlusses entsteht. Bevorzugt ist dieser gekröpfte Bereich ein von dem Stirnende des festzulegenden Riemenendes weg weisender Teil der Adapterplatte. Der gekröpfte Bereich kann darüber hinaus abschnittsweise gebogen sein, so dass eine Bewegung des Riemenendes dieses nicht an scharfen Ecken oder Kanten der Adapterplatte scheuern lässt.

Insbesondere ist die Adapterplatte als Stabadapterplatte ausgebildet, die an dem Riemenende festzulegen ist und an der wiederum ein Stab anzuordnen ist. Vorzugsweise ist der Stab an einem abgekröpften Bereich angeordnet und wird in der Befestigungsposition an dem Riemenende außenseitig von der Adapterplatte umfasst.

Ober-und Unterteil sind vorzugsweise voneinander beabstandet. Sie können allerdings auch durch einzelne, stabilisierende Streben oder Stege miteinander verbunden sein bzw. Aufnahmen für entsprechend geformte Teile des Riemenadapters ausbilden.

Vorzugsweise haben Ober- und Unterteil und das zumindest eine Adapterelement miteinander fluchtende Ausnehmungen zur Anordnung von Befestigungsmitteln. So kann beispielsweise eine Befestigung des Anschlussstücks gleichzeitig mit seinem Ober-und seinem Unterteil erfolgen.

Ein Riemenschloss unter Einschluss eines flächigen Adapterelements umfasst zwecks Festlegung des Riemenadapters an dem jeweiligen Riemenende insbesondere eine Klemmplatte, über die eine Adapterplatte mit dem Riemenende und/oder dem Anschlussstück verklemmt werden kann. Eine solche Klemmplatte, die eine Länge hat, die vorzugsweise in etwa der Quererstreckung des festzuklemmenden Riemenendes entspricht, verteilt etwaige Klemmkräfte besonders gut über die Adapterplatte bzw. das Adapterelement.

Zwecks verbesserter Festlegung des Riemenadapters an dem jeweiligen Riemenende weist der Riemenadapter wenigstens ein in Richtung eines anzuordnenden Riemenendes weisendes Zahnelement auf. Durch eine Festklemmung oder Verschraubung des Riemenadapters an dem Riemenende können sich solche Zahnelemente in das Material des Riemens eindrücken und somit einen zusätzlichen Abreißschutz und eine zusätzliche Festlegung des Riemenadapters in Längsrichtung des Riemens bewirken. Beispielsweise sind solche Zahnelemente durch eine schräge Dreieckstanzung zu erzeugen, wobei der Riemenadapter insbesondere aus einem Stahlmaterial besteht.

Bei der Verwendung von zwei Adapterplatten weisen vorzugsweise beide in Richtung des Riemens weisende Zahnelemente auf. Alternativ weist nur eines der Adapterelemente eine Mehrzahl von Zahnelementen auf. Die Zahnelemente sind insbesondere nebeneinander und quer zur Längserstreckung des Riemens sowie neben Ausnehmungen der Adapterplatte zur Anordnung von Befestigungsmitteln angeordnet. Hierdurch erfolgt eine Komprimierung des Riemenmaterials in den durch von etwaige Befestigungsmitteln ausgeübten Zugkräften besonders beanspruchten Riemenbereichen, so dass die Kräfte verbessert in das Riemenmaterial eingeleitet werden.

Die Adapterplatte kann zwecks Aufnahme des Anschlussstücks einen zurückspringenden Bereich aufweisen, in den zumindest Teile des Anschlussstücks einzulegen bzw. einzuschieben sind. Hierdurch wird die Montage erleichtert und ein sicherer Sitz von Anschlussstück an dem Riemenadapter bzw. umgekehrt ermöglicht. Ebenfalls kann der Riemenadapter einen insbesondere auf seiner zum Riemen zu wendenden Seite einen zurückspringenden Riemenaufnahmebereich aufweisen. Eine solcher taschenartiger Bereich oder eine solche Ausnehmung dient der Anordnung von Riemenmaterial, welches sich bei einer Verklemmung des Riemenadapters am Riemen in diesem Bereich hineinbewegen kann, um einen besseren und sicheren Sitz gegen Ausreißen des Riemenadapters vom Riemenende zu gewährleisten.

Ein Ende und/oder Kanten des Riemenadapters können gebogen und somit riemenschonend ausgebildet sein, um die Integrität des Riemenmaterials möglichst lange zu erhalten. Insbesondere entspricht die Krümmung eines abgebogenen Endes der maximalen Krümmung des Riemens, so dass sich dieser in Umlenkbereichen entsprechend an einem Ende des Riemenadapters bzw. der Adapterplatte anlegen kann.

Der Scharnierbereich des Riemenschlosses gemäß der Erfindung ist insbesondere buchsenlos ausgebildet. Durch die einfache Wechselmöglichkeit des Anschlussstücks kann dieses aus einem passenden, und insbesondere weicheren Metall als der Riemenadapter ausgebildet werden, um einerseits eine gute Beweglichkeit des Stabs im Riemenschloss und einen gezielten Verschleißort zu gewährleisten. Ein Verschleiß kann gut erkannt werden und das Riemenschloss ist verschleißoptimiert ausgebildet.

Vorzugsweise sind die Anschlussstücke eines Riemenschlosses identisch ausgebildet und als F-Typ-Anschlussstücke ausgebildet. D.h. sie sind in einer Ansicht von z.B. unten F-förmig und weisen einen Scharnierbereich auf, der durch zwei entsprechend gebogene Bandbereiche oder Bänder ausgebildet wird. Ein weiteres Anschlussstück kann sich dann verdreht zwischen bzw. neben diese gebogenen Bereiche anordnen lassen, so dass über die gesamte Breite eines Riemenschlosses vier gebogene Bänder, die den jeweiligen Scharnierbereich der jeweiligen Anschlussstücke entsprechen, von einem Stab durchsetzt werden.

Die eingangs gestellte Aufgabe wird ebenfalls durch einen Riemen für ein landwirtschaftliches Arbeitsgerät gelöst, welches ein vor- oder nachbeschriebenes Riemenschloss aufweist. Hierbei ist ein Riemenende zumindest teilweise zwischen Ober-und Unterteil befestigt, wobei die beiden Anschlussstücke insbesondere über ein Stabende miteinander verbunden sind. Die jeweils an einem der beiden Riemenenden angeordneten Riemenadapter sind insbesondere zwischen den Innenseite vom jeweiligen Ober- und Unterteil und dem jeweiligen Riemenende angeordnet und weisen eine lösbare Befestigung mit dem jeweiligen Anschlussstück auf.

In Riemenlängsrichtung ist die Länge des Riemenadapters vorzugsweise geringer als der Abstand zweier aufeinanderfolgender Siebstäbe, so dass neben einer Befestigung eines Siebstabes über den Anschlussadapter eine ausreichende Flexibilität beibehalten wird, um den Riemenlauf insbesondere in den Umlenkbereichen nicht zu beeinträchtigen.

Weitere Vorteile und Einzelheiten der Erfindung sind der nachfolgenden Figurenbeschreibung zu entnehmen. In den Figuren zeigt schematisch:
- Fig. 1: einen erfindungsgemäßen Gegenstand in einer perspektivischen Ansicht,
- Fig. 2: ein Anschlussstück eines weiteren erfindungsgemäßen Gegenstands,
- Fig.3: den Gegenstand nach Fig. 2 in einer Draufsicht,
- Fig. 4: den Gegenstand nach Fig. 3 gemäß A-A nach Fig. 3,
- Fig. 5: einen weiteren erfindungsgemäßen Gegenstand in einer teilweisen Ansicht in einer Betriebsposition
- Fig. 6: den Gegenstand nach Fig. 5 in einer teilweisen Ansicht,
- Fig. 7: einen weiteren erfindungsgemäßen Gegenstand.

Einzelne technische Merkmale der nach beschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

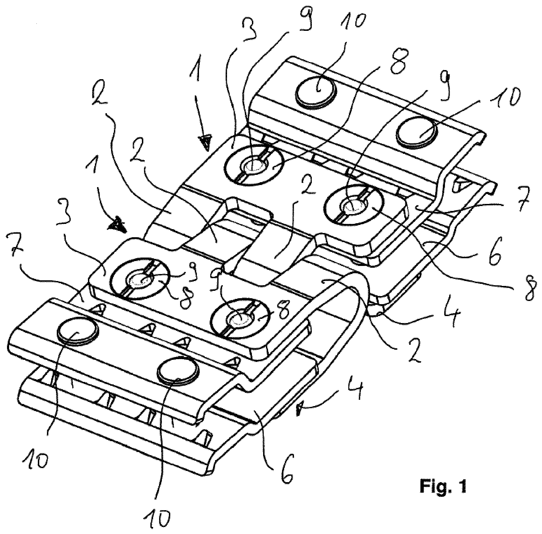

Ein erfindungsgemäßes Riemenschloss weist gemäß Fig. 1 zwei Anschlussstücke 1 auf, die als F-Typ-Anschlussstücke (in Draufsicht ergibt sich eine F-Form) teilweise ineinander und aneinander angeordnet sind. Die gebogenen Bänder 2 verbinden ein jeweiliges Oberteil 3 eines jeweiligen Anschlussstücks 1 einstückig mit einem jeweiligen Unterteil 4. Innenseitig von Oberteil 3 und Unterteil 4 ist jedem Anschlussstück ein zwei Adapterplatten 6 und 7 umfassender Riemenadapter zugeordnet, über den die Anschlussstücke an nicht dargestellten jeweiligen Riemenenden anzuordnen sind.

Das Oberteil 3 und das Unterteil 4 sowie die obere Adapterplatte 7 und die untere Adapterplatte 6 weisen miteinander fluchtende Ausnehmungen zur Anordnung von Befestigungsmitteln 8,9 und 10 auf. Mittels der Befestigungsmittel 8 und 9 sind die Anschlussstücke 1 lösbar mit dem Riemenadapter bzw. dessen beiden Adapterplatten 6,7 verbunden.

Das Befestigungsmittel 8 ist vorliegend als eine in dem Oberteil 3 versenkbare Hülsenmutter, deren oberer Rand konisch verläuft, ausgebildet. Entsprechend verjüngt sich auch die von der Hülsenmutter 8 abgedeckte Ausnehmung. In dem Gewinde der Hülsenmutter 8 findet sich das als Gewindeschraube ausgebildete Befestigungsmittel 9.

Zur Ausbildung einer unlösbaren Verbindung zwischen dem nicht dargestellten Riemenende und dem Riemenadapter werden als Nietnägel ausgebildete Befestigungsmittel 10 verwendet (Fig. 1).

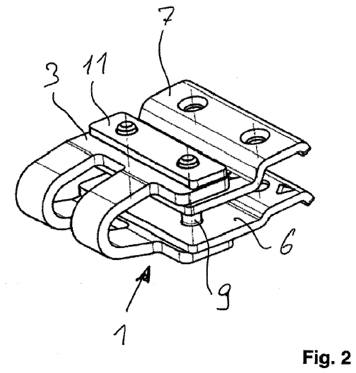

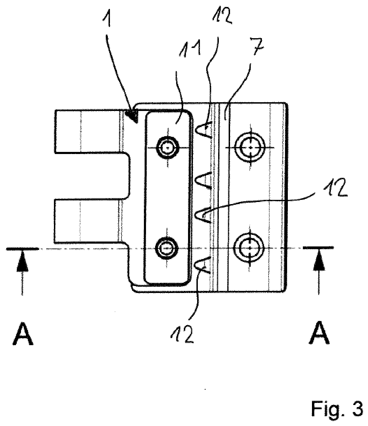

Im Ausführungsbeispiel gemäß der Fig. 2 und 3 ist nur ein Teil eines Riemenschlosses umfassend das Anschlussstück 1 und einen Riemenadapter gezeigt. Vorliegend ist das Anschlussstück 1 mittels einer Klemmplatte 11 gegen die Adapterplatte 7 verklemmt. Die Klemmplatte 11 weist Ausnehmungen auf, in der ein ebenfalls als Gewindeschraube ausgebildetes Befestigungsmittel 9 angeordnet ist, welches gleichwohl anders als das Befestigungsmittel 9 in Fig. 1 ausgebildet sein kann. Die Klemmplatte 11 weist auf ihrer in der Fig. 2 nicht dargestellten Unterseite Erhebungen auf, die in korrespondierende Ausnehmungen des Oberteils 3 eingreifen und für einen optimalen Sitz der Klemmplatte 11 an dem Anschlussstück 1 sorgen. Somit wird einerseits die Klemmplatte 11 dazu verwendet, die lösbare Verbindung der Adapterplatten 6 und 7 an das Anschlussstück 1 zu gewährleisten, gleichzeitig erfolgt hierüber eine Klemmung des nicht dargestellten und zwischen den Adapterplatten 6 und 7 anzuordnenden Riemenendes und somit ebenfalls eine Festlegung der Adapterplatten 6 und 7 an dem Riemenende.

Zusätzlich umfasst sowohl die obere Adapterplatte 7 als auch die in der Figur nicht dargestellte untere Adapterplatte 6 eine Reihe von Zahnelementen 12, durch die sich ein Verkrallen der Adapterplatte 7 bei deren Befestigung an dem Riemenende in dem Material des Riemens ergibt. Beispielsweise sind die Zahnelemente 12 durch Stanzen in das Metall der Adapterplatte 7 erzeugt worden (Fig. 3).

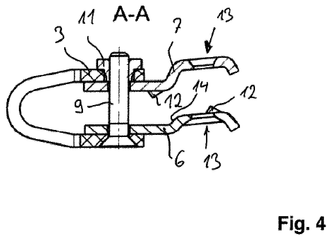

Während in der oberen Adapterplatte 7 die Zahnelemente 12 in dem in der Fig. 4 dargestellten linken unteren Bereich und nicht in einem abgekröpften oberen Bereich angeordnet sind, weist die untere Adapterplatte 6 die Zahnelemente 12 in dem oberen Bereich neben den Adapterplattenausnehmungen 13 zur Durchführung von Befestigungselementen auf. Die Einwirkung auf das Riemenmaterial wird somit über den Bereich des Riemenendes in Riemenlängsrichtung verteilt. Die obere Adapterplatte 7 ist aufgrund ihrer oberen Abkröpfung gleichzeitig als Stabadapterplatte ausgebildet, d.h. der Versatz des rechten, mit der Adapterplattenausnehmung 13 versehenen oberen Endes ist so groß, dass dort noch zwischen Adapterplatte 7 und Riemenende ein vorzugsweise als Siebstab ausgebildeter Stab angeordnet werden kann.

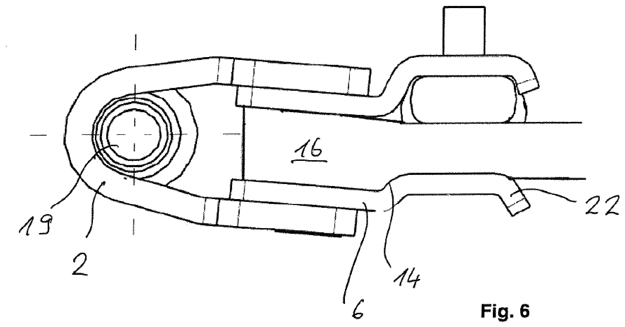

Die Abkröpfung der unteren Adapterplatte 6 ist geringer ausgeprägt. Mittels einer Kante 14 kann sich die Adapterplatte an einen nur geringfügig über die Dicke des sonstigen Materials des Riemenende erhöhenden Steg anlehnen (vgl. Fig. 6) und so einen zusätzlichen Widerstand gegen ein Abreißen des Riemenadapters vom Riemenende bewirken.

Fig. 4 ist ebenfalls die Form der Klemmplatte 11 zu entnehmen, die mit ihrem unteren Ende eine Art Gewindehülse ausbildet, welche in die Ausnehmung des Oberteils 3 eingreift.

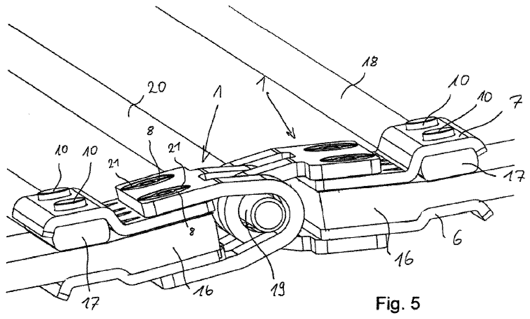

Die Anordnung eines Siebstabes zwischen Riemenende 16 und oberer Adapterplatte 7 des Riemenadapters ist in Fig. 5 dargestellt. Abgeflachte Endbereiche 17 jeweiliger Siebstäbe 18 sind zwischen dem abgekröpften oberen Bereich der Adapterplatte 7 und dem Riemenende 16 angeordnet. Befestigungsmittel 10 in Form von Nieten können in einem Arbeitsgang innerhalb einer Nietmaschine gleichzeitig die beiden Adapterplatten 6 und 7 sowie den Siebstab 18 am Riemen befestigen. Durch die lösbaren Befestigungsmittel 8 und 9 ist einerseits der einfache Austausch der Anschlussstücke 1 als auch die Verwendung eines Stabendes 19 eines Siebstabes 20 als Schlossstift leicht möglich. Im Falle von Verschleiß des Scharnierbereichs des Anschlussstücks 1 kann dieses vergleichsweise günstige Teil einfach manuell gelöst und ausgetauscht werden. Zur Vermeidung von überstehenden Muttern weist das als Gewindehülse ausgebildete Befestigungsmittel 8 außenseitig Vertiefungen 21 zum Kontern des für die Verschraubung aufgebrachten Drehmoments auf.

Insbesondere in der Fig. 6 ist erkennbar, dass ein nach unten hin verdickter und stegartiger Bereich des Riemenendes 16 sich an der Kante 14 der unteren Adapterplatte 6 anlegt. Ein von dem Riemenende wegführendes Ende 22 der Adapterplatte 6 ist gebogen ausgebildet, um bei einem Umlaufen des Riemens und damit einhergehender Krümmung in Umlenkbereichen ein Aufscheuern des Materials zu vermeiden und das Riemenende zu schonen.

Die gebogenen Bänder 2 sind in ihrer Krümmung angepasst auf den Radius des Stabendes 19 des Siebstabes 20, so dass keine zusätzlichen Buchsen mehr verwendet werden müssen.

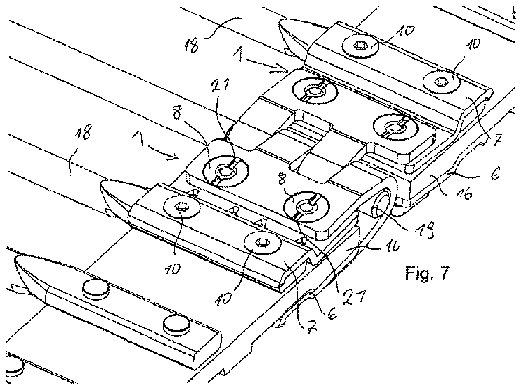

Anstatt Niete als Befestigungsmittel 10 für die Festlegung eines Siebstabes 18 am Riemen zu verwenden können gemäß dem Ausführungsbeispiel nach Fig. 7 auch Schrauben verwendet werden, die vorzugsweise in den oberen Adapterplatten 7 versenkt werden und die auf der in der Fig. nicht dargestellten Unterseite mit Gegenstücken zum Beispiel in Form von versenkten Hülsenmuttern oder Gewindeplatten verschraubt sind.

## Patentansprüche

1. Riemenschloss für einen Riemen für ein landwirtschaftliches Arbeitsgerät, insbesondere eine Hackfruchternte- oder -transportmaschine, umfassend zwei über einen Schlossstift zu verbindende Anschlussstücke (1), die jeweils ein Oberteil (3) und ein Unterteil (4) aufweisen, die einstückig mit einem eine Aufnahme für den Schlossstift ausbildenden Scharnierbereich und zur zumindest teilweisen Anordnung eines jeweiligen Riemenendes (16) zwischen sich ausgebildet sind, insbesondere wobei Ober- und Unterteil (3,4) jeweils wenigstens eine Ausnehmung zur Anordnung von Befestigungsmitteln (8,9) aufweisen, wobei das Riemenschloss einen an dem jeweiligen Anschlussstück (1) angeordneten Riemenadapter umfasst, über den das jeweilige Riemenende (16) lösbar mit dem jeweiligen Anschlussstück (1) zu verbinden ist und der wenigstens ein flächiges, als Adapterplatte (6,7) ausgebildetes Adapterelement aufweist, auf dessen einer Seite das Riemenende (16) anzuordnen ist, während auf einer von dieser Seite abgewandten weiteren Seite der Ober- oder Unterteil (3,4) des Anschlussstücks (1) angeordnet ist, **dadurch gekennzeichnet, dass** die Adapterplatte (6,7) einen gekröpften Bereich aufweist und derart ausgebildet ist, dass sich über den abgekröpften Bereich im Riemen ein Engpass bilden lässt, so dass ein Formschluss entsteht.

2. Riemenschloss nach Anspruch 1, **dadurch gekennzeichnet, dass** das Anschlussstück (1) lösbar und insbesondere über eine Hülsenmutter-Gewindeschrauben-Kombination an dem Riemenadapter befestigt ist

3. Riemenschloss nach einem der vorherigen Ansprüche, **dadurch gekennzeichnet, dass** der Riemenadapter zwei auf voneinander abgewandten Seiten des Riemenendes (16) anzuordnende Adapterplatten (6,7) aufweist.

4. Riemenschloss nach einem der vorherigen Ansprüche, **dadurch gekennzeichnet, dass** die Adapterplatte (7) als Stabadapterplatte ausgebildet ist, die an dem Riemenende (16) festzulegen ist und an der ein Stab (18) anzuordnen ist.

5. Riemenschloss nach einem der vorherigen Ansprüche, **dadurch gekennzeichnet, dass** Ober- und Unterteil (3,4) und die zumindest eine Adapterplatte (6,7) miteinander fluchtende Ausnehmungen zur Anordnung von Befestigungsmitteln (8,9) aufweisen.

6. Riemenschloss nach einem der vorherigen Ansprüche, **dadurch gekennzeichnet, dass** der Riemenadapter eine Klemmplatte (11) umfasst, über die die Adapterplatte (7) mit dem Riemenende (16) und/oder dem Anschlussstück (1) verklemmt werden kann.

7. Riemenschloss nach einem der vorherigen Ansprüche, **dadurch gekennzeichnet, dass** der Riemenadapter wenigstens ein in Richtung eines anzuordnenden Riemenendes (16) weisendes Zahnelement (12) aufweist.

8. Riemenschloss nach einem der vorherigen Ansprüche, **dadurch gekennzeichnet, dass** der Riemenadapter einen zurückspringenden Bereich zur Aufnahme des Anschlussstücks (1) aufweist.

9. Riemenschloss nach einem der vorherigen Ansprüche, **dadurch gekennzeichnet, dass** der Riemenadapter einen zurückspringenden Riemenaufnahmebereich aufweist.

10. Riemenschloss nach einem der vorherigen Ansprüche, **dadurch gekennzeichnet, dass** der Riemenadapter ein gebogenes Ende (22) aufweist.

11. Riemenschloss nach einem der vorherigen Ansprüche, **dadurch gekennzeichnet, dass** der Scharnierbereich buchsenlos ausgebildet ist.

12. Riemenschloss nach einem der vorherigen Ansprüche, **dadurch gekennzeichnet, dass** die Anschlussstücke (1) als F-Typ-Anschlussstücke ausgebildet sind.

13. Riemen für ein landwirtschaftliches Arbeitsgerät, insbesondere eine Hackfruchternte- oder -transportmaschine, umfassend ein Riemenschloss nach einem der vorherigen Ansprüche, wobei das Riemenende zwischen Ober- und Unterteil (3,4) befestigt ist und die beiden Anschlussstücke (1) insbesondere über ein Stabende (19) miteinander verbunden sind.

14. Riemen nach Anspruch 13, **dadurch gekennzeichnet, dass** in Riemenlängsrichtung die Länge des Riemenadapters geringer ist als der Abstand zweier aufeinander folgender Siebstäbe (18,20).

## Claims

1. Belt lock for a belt for an agricultural implement, in particular a root-crop harvesting or transport machine, comprising two connection pieces (1) to be connected via a lock pin and having in each case a top part (3) and a bottom part (4) which are formed in one piece with a hinge region, forming a receptacle for the lock pin, and are configured for at least partial arrangement of a respective belt end (16) between them, in particular wherein the top and bottom parts (3, 4) each have at least one recess for arrangement of fastening means (8, 9), wherein the belt lock comprises a belt adaptor which is arranged on the respective connection piece (1) and via which the respective belt end (16) is to be releasably connected to the respective connection piece (1), said belt adaptor having at least one areal adaptor element which is in the form of an adaptor plate (6, 7) and on one side of which the belt end (16) is to be arranged, while the top or bottom part (3, 4) of the connection piece (1) is arranged on a further side, which is averted from the side on which the belt is to be arranged, **characterized in that** the adaptor plate (6, 7) has a cranked region and is formed in such a way that a constriction can be formed via the cranked region in the belt, so that a form fit is produced.

2. Belt lock according to Claim 1, **characterized in that** the connection piece (1) is fastened releasably and in particular via a sleeve-nut/threaded-screw combination to the belt adaptor.

3. Belt lock according to either of the preceding claims, **characterized in that** the belt adaptor has two adaptor plates (6, 7) which are to be arranged on mutually averted sides of the belt end (16).

4. Belt lock according to one of the preceding claims, **characterized in that** the adaptor plate (7) is in the form of a bar adaptor plate which is to be fixed to the belt end (16) and on which a bar (18) is to be arranged.

5. Belt lock according to one of the preceding claims, **characterized in that** the top and bottom parts (3, 4) and the at least one adaptor plate (6, 7) have mutually aligned cutouts for arrangement of fastening means (8, 9) .

6. Belt lock according to one of the preceding claims, **characterized in that** the belt adaptor comprises a clamping plate (11) via which the adaptor plate (7) can be clamped to the belt end (16) and/or to the connection piece (1).

7. Belt lock according to one of the preceding claims, **characterized in that** the belt adaptor has at least one tooth element (12) which points in the direction of a belt end (16) to be arranged.

8. Belt lock according to one of the preceding claims, **characterized in that** the belt adaptor has a set-back region for receiving the connection piece (1).

9. Belt lock according to one of the preceding claims, **characterized in that** the belt adaptor has a set-back belt-receiving region.

10. Belt lock according to one of the preceding claims, **characterized in that** the belt adaptor has a bent end (22) .

11. Belt lock according to one of the preceding claims, **characterized in that** the hinge region is formed without any bushes.

12. Belt lock according to one of the preceding claims, **characterized in that** the connection pieces (1) are in the form of F-type connection pieces.

13. Belt for an agricultural implement, in particular a root-crop harvesting or transport machine, comprising a belt lock according to one of the preceding claims, wherein the belt end is fastened between the top and bottom parts (3, 4) and the two connection pieces (1) are connected to one another in particular via a bar end (19) .

14. Belt according to Claim 13, **characterized in that**, in the belt longitudinal direction, the length of the belt adaptor is shorter than the distance between two successive screening bars (18, 20).

## Revendications

1. Attache de courroie pour une courroie destinée à un outil de travail agricole, en particulier une machine de récolte ou de transport de fruits secs, comprenant deux pièces de raccordement (1) à relier par une goupille de verrouillage, qui présentent chacune une partie supérieure (3) et une partie inférieure (4), qui sont réalisées d'une seule pièce avec une zone de charnière formant un logement pour la goupille de verrouillage et pour l'agencement au moins partiel d'une extrémité de courroie respective (16) entre elles, en particulier les parties supérieure et inférieure (3, 4) présentant chacune au moins un évidement pour l'agencement de moyens de fixation (8, 9), l'attache de courroie comprenant un adaptateur de courroie agencé sur la pièce de raccordement respective (1), par l'intermédiaire duquel l'extrémité respective de la courroie (16) doit être reliée de manière amovible à la pièce de raccordement respective (1) et qui présente au moins un élément d'adaptation plat, réalisé sous forme de plaque d'adaptation (6, 7), sur un côté duquel l'extrémité de la courroie (16) doit être agencée, tandis que la partie supérieure ou la partie inférieure (3, 4) de la pièce de raccordement (1) est agencée sur un autre côté opposé à ce côté, **caractérisée en ce que** la plaque d'adaptation (6, 7) présente une zone coudée et est conçue de telle sorte qu'un passage étroit peut être formé dans la courroie par la zone coudée, de sorte qu'il en résulte un engagement positif.

2. Attache de courroie selon la revendication 1, **caractérisée en ce que** la pièce de raccordement (1) est fixée de manière amovible à l'adaptateur de courroie, en particulier au moyen d'une combinaison écrou à douille/vis filetée.

3. Attache de courroie selon l'une des revendications précédentes, **caractérisée en ce que** l'adaptateur de courroie présente deux plaques d'adaptation (6, 7) à disposer sur des côtés opposés de l'extrémité de la courroie (16).

4. Attache de courroie selon l'une des revendications précédentes, **caractérisée en ce que** la plaque d'adaptation (7) est conçue sous la forme d'une plaque d'adaptation de barre, qui doit être fixée à l'extrémité de la courroie (16) et sur laquelle une barre (18) doit être agencée.

5. Attache de courroie selon l'une des revendications précédentes, **caractérisée en ce que** les parties supérieure et inférieure (3, 4) et l'au moins une plaque d'adaptation (6, 7) présentent des évidements alignés les uns avec les autres pour la disposition de moyens de fixation (8, 9).

6. Attache de courroie selon l'une des revendications précédentes, **caractérisée en ce que** l'adaptateur de courroie comprend une plaque de serrage (11) par laquelle la plaque d'adaptation (7) peut être serrée avec l'extrémité de la courroie (16) et/ou la pièce de raccordement (1).

7. Attache de courroie selon l'une des revendications précédentes, **caractérisée en ce que** l'adaptateur de courroie présente au moins un élément denté (12) orienté en direction d'une extrémité de courroie (16) à disposer.

8. Attache de courroie selon l'une des revendications précédentes, **caractérisée en ce que** l'adaptateur de courroie présente une zone en retrait destinée à recevoir la pièce de raccordement (1).

9. Attache de courroie selon l'une quelconque des revendications précédentes, **caractérisée en ce que** l'adaptateur de courroie présente une zone en retrait, de réception de courroie.

10. Attache de courroie selon l'une quelconque des revendications précédentes, **caractérisée en ce que** l'adaptateur de courroie présente une extrémité coudée (22) .

11. Attache de courroie selon l'une des revendications précédentes, **caractérisée en ce que** la zone de charnière est conçue sans douilles.

12. Attache de courroie selon l'une des revendications précédentes, **caractérisée en ce que** les pièces de raccordement (1) sont des pièces de raccordement de type F.

13. Courroie pour un outil de travail agricole, en particulier une machine de récolte ou de transport de fruits secs, comprenant une attache de courroie selon l'une des revendications précédentes, l'extrémité de la courroie étant fixée entre les parties supérieure et inférieure (3, 4) et les deux pièces de raccordement (1) étant reliées entre elles, en particulier par une extrémité de tige (19).

14. Courroie selon la revendication 13, **caractérisée en ce que**, dans la direction longitudinale de la courroie, la longueur de l'adaptateur de courroie est inférieure à la distance entre deux barres de tamisage (18, 20) successives.
